# EUROPÄISCHE PATENTSCHRIFT

(11) **EP 2 578 954 B1**
(45) Veröffentlichungstag und Bekanntmachung des Hinweises auf die Patenterteilung: **15.04.2015**
(21) Anmeldenummer: 12186510.9
(22) Anmeldetag: 28.09.2012
(51) Int. Cl.: F24F 3/06, F24F 5/00, F24F 12/00

(54) **Vorrichtung zur Kühlung von Raumluft**
Device for cooling ambient air
Dispositif de refroidissement de l'air ambiant

(30) Priorität: 06.10.2011 CH 16402011
(43) Veröffentlichungstag der Anmeldung: 10.04.2013
(73) Patentinhaber: Marra, Bruno, 5243 Mülligen (CH)
(72) Erfinder: Marra, Bruno, 5243 Mülligen (CH)
(74) Vertreter: Spierenburg, Pieter

(56) Entgegenhaltungen:
- CN-A- 101 586 851
- DE-C- 913 954
- GB-A- 2 247 072
- JP-A- 2005 201 574

## Beschreibung

Die Erfindung betrifft eine Vorrichtung zur Kühlung von Raumluft in einem geschlossenen Raum nach dem Oberbegriff des Patentanspruchs 1.

### STAND DER TECHNIK

Wohn- und Büroräume werden an heissen Sommertagen in der Regel mit einer üblichen Klimaanlage gekühlt. Solche Anlagen brauchen viel elektrische Energie und müssen mit erheblichem Aufwand installiert werden (siehe z.B. Patentdokument DE-913954-C). Ferner sind solche Klimaanlagen im Betrieb relativ lärmig.

### AUFGABE DER ERFINDUNG

Der vorliegenden Erfindung liegt nun die Aufgabe zugrunde, eine Kühlvorrichtung zu gestalten, die weniger elektrische Energie verbraucht und einfach zu installieren ist.

### GEGENSTAND DER ERFINDUNG

Diese Aufgabe wird durch eine Kühlvorrichtung mit den Merkmalen des Patentanspruchs 1 gelöst.

Die erfindungsgemässe Kühlvorrichtung hat den grossen Vorteil, dass sie sehr kompakt, klein und leise ist. Ferner ist die Kühlvorrichtung vielseitig einsetzbar.

### BESCHREIBUNG EINES AUSFÜHRUNGSBEISPIELES DER ERFINDUNG

Weitere Vorteile der Erfindung ergeben sich aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: eine schematische Darstellung einer Kühlvorrichtung,
- Fig. 2: eine Aufstellung der Kühlvorrichtung in einem geschlossenen Raum, und
- Fig. 3: eine Aufstellung der Kühlvorrichtung ausserhalb eines geschlossenen Raumes.

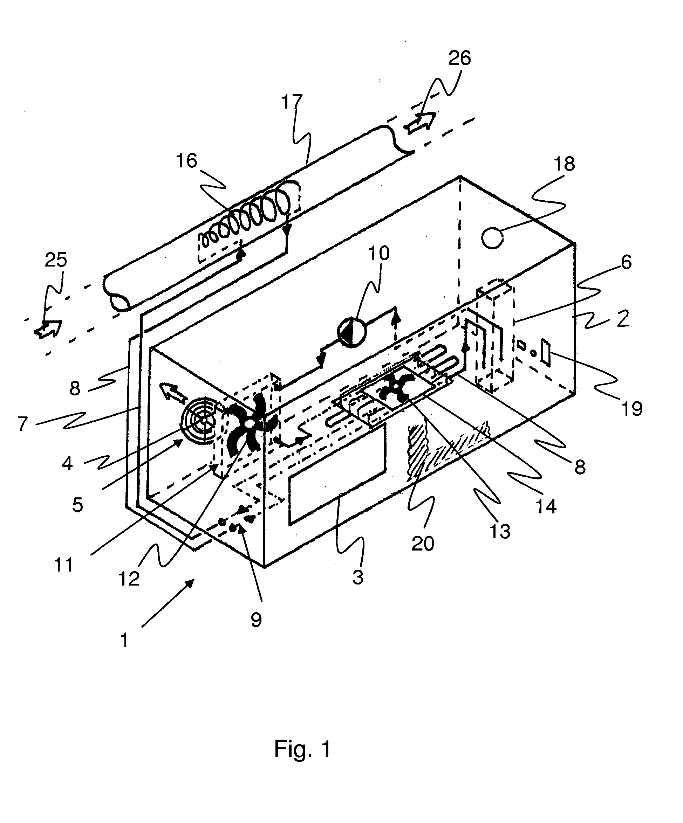

In Figur 1 ist eine Vorrichtung 1 zur Kühlung von Raumluft in einem gesschlossen Raum gezeigt, die aus einem luftdicht abgeschlossenen Behälter 2 mit einer Zuluftöffnung 3 und einer Abluftöffnung 4 besteht. Die Abluftöffnung 4 ist mit einem Gitter 5 versehen und über einen nicht dargestellten Schlauch mit der Aussenluft verbunden. Im Behälter 2 ist ein oben offenes Gefäss 6 mit darin eingefülltem Wasser vorgesehen, in welchem das Ende eine als Vorlauf dienende Rohrleitung 7 und das Ende eines als Rücklauf dienende Rohrleitung 8 hineinragen. Die Rohrleitungen 7 und 8 bilden einen Wasserkreislauf 9. Die Rohrleitung 7 ist an einer Wasserpumpe 10 angeschlossen und führt über einen Wasserkühler 11 mit einem Ventilator 12 zu einem zusätzlichen Wasserkühlelement 13, vorzugsweise mit Kühlrippen aus Aluminium, welches ebenfalls einen Ventilator 14 aufweist. Die als Vorlauf dienende Rohrleitung 7 ist sodann aus dem Behälter 2 hinaus zu einem spiralförmigen Rohr 16 geführt, welches in einem Lüftungskanal 17 angeordnet ist. Von diesem spiralförmigen Rohr 16 führt die als Rücklauf dienende Rohrleitung 8 wieder in den Behälter 2 direkt zu dem offenen Gefäss 6. In der Deckplatte des Behälters 2 ist eine Kontrollöffnung 18 vorgesehen, welche mit einem Deckel oder mit einer Glasabdeckung verschlossen ist, um den Wasserstand in dem offenen Gefäss 6 überprüfen und das Gefäss 6 gegebenenfalls nachfüllen zu können. In der Wand des Behälters 2 ist ferner ein elektrischer Schalter 19 mit einer Sicherung und einer Anschlussbuchse für einer - nicht-dargestellten - elektrischen Stromversorgung für die beiden Ventilatoren 12 und 14 vorgesehen. Der Behälter 2 ist ferner mit einer Wärmedämmplatte 20, beispielsweise Flumroc 3 Alu der Firma Flumroc AG, CH-8890 Flums, ausgekleidet, um den Wärmeverlust nach aussen möglichst gering zu halten.

Die Rohrleitungen 7, 8 und das spiralförmige Rohr 16 sind aus Kupfer mit einer Wandstärke von etwa 1 mm ausgebildet. Alternativ kann das spiralförmige Rohr 16 auch als Wellrohr aus Edelstahl mit einer sehr dünnen Wandstärke von etwa 0.1 mm ausgebildet sein, wodurch eine bessere Wärmeübertragung zwischen dem Kühlwasser und der zu kühlenden warmen Luft gewährleistet ist.

Als Wasserkühler 4 hat sich der Radiator Black ICE GT Stealth 240 der Firma Black Ice, Manilla, Philippinen, besonders bewährt. Dieser weist eine Vielzahl paralleler Lamellen auf, damit eine besonders wirksame und schnelle Kühlung des Kühlwassers erfolgen kann. Dazu wird ein Hochleistungsventilator mit einem Luftdurchsatz von mindestens 100 m³/h, vorzugsweise mit einem besonders hohen Luftdurchsatz von bis 450 m³/h eingesetzt. Ausgezeichnet geeignet ist der Ventilator oder Lüfter Jou Jye Turbo PWM mit einer Luftdrehzahl von 6000 U/min.

Als Wasserpumpe 10 ist die Umwälzpumpe CM10/30 der Firma Johnson Pump, Schweden besonders geeignet.

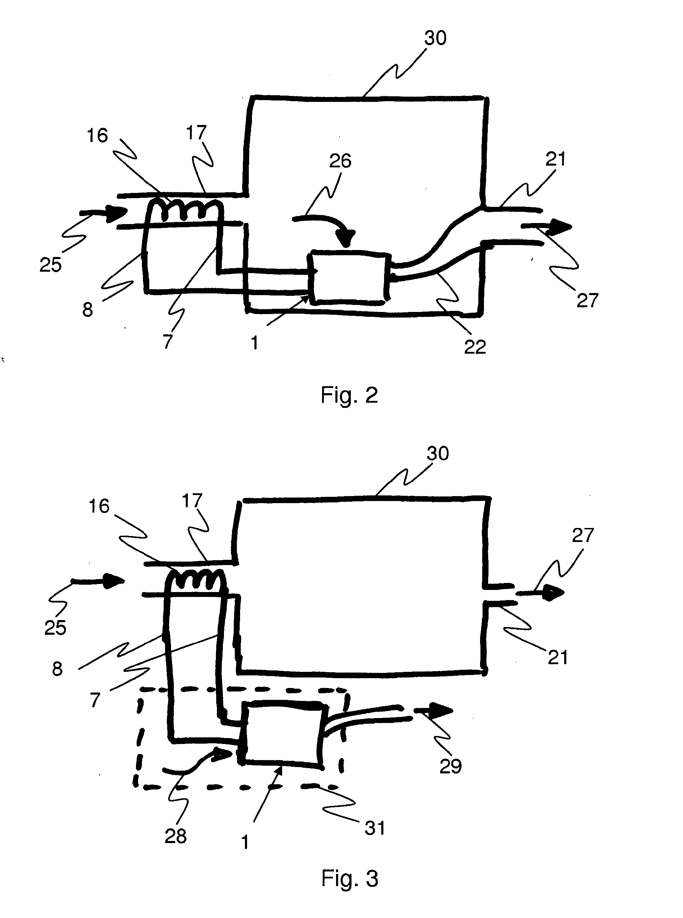

Anhand der Figur 2 kann nun die Funktionsweise der Kühlvorrichtung 1 wie folgt erklärt werden:
Der Lüftungskanal 17 mündet in einen zu kühlenden Raum 30, welcher ferner einen Abluftkanal 21 aufweist, um die Raumluft 26 als wärmere Abluft 27 wieder abzuführen, damit kein Überdruck im zu kühlenden Raum 30 entsteht. In Figur 2 ist die Kühlvorrichtung 1 im Raum 30 aufgestellt, und weist ein an der Abluftöffnung 4 angeschlossenes Abluftrohr 22 auf, welches am Abluftkanal 21 angeschlossenen ist.

Die warme Luft 25 wird nun durch das Kühlwasser auf eine tiefere Temperatur gekühlt, welches über die Rohrleitung 7 als Vorlauf durch das spiralförmige Rohr 16 fliesst, und dort durch die Temperaturdifferenz Wärme der warmen Luft 25 entzieht. Das aufgewärmte Wasser fliesst dann durch die Rohrleitung 8 als Rücklauf in das offene Gefäss 6. Das erwärmte Wasser wird einerseits durch eine geringe Verdunstung des Wassers im offenen Gefäss 6 leicht abgekühlt und dann durch die Pumpe 10 über die Rohrleitung 7 zum Wasserkühler 11 geführt. Durch den Wasserkühler 11 und das zusätzliche Wasserkühlelement 13 wird das erwärmte Wasser durch die angesaugte gekühlte Raumluft 26 weiter auf eine tiefere Temperatur gekühlt. Durch das Abluftrohr 22 wird die wärmere Abluft 27, welche eine etwas höhere Luftfeuchte aufweist als die warme Aussenluft 25, über den Abluftkanal 21 nach aussen abgeführt. Da die Behälter 2 sehr gut wärmegedämmt ist, wird verhindert, dass Wärme an den gekühlten Raum 30 abgegeben wird. Die von der Kühlvorrichtung 1 angesaugte gekühlte Luft 26 wird die überschüssige Wärme des Kühlwassers aufnehmen, wobei diese Wärme durch die Abluft 27 nach aussen geführt wird.

In Figur 3 ist die Kühlvorrichtung 1 in einem Keller 31 eines Wohn- oder Geschäftshaus in der Nähe des Lüftungskanals 17 aufgestellt. Da hier nun kühlere Luft 28 aus dem Keller von der Kühlvorrichtung angesaugt und als warme Abluft 29 nach aussen geführt wird, ist der Kühleffekt noch besser als in der Aufstellung gemäss der Figur 2.

Die Kühlvorrichtung 1 ist sehr kompakt, klein, leise und vielseitig einsetzbar. Die Wasserpumpe 10 und die Ventilatoren 12 und 14 können für den elektrischen Antrieb an Solarzellen angeschlossen sein. Die Kühlvorrichtung 1 verbraucht ferner wenig Strom und wird bei einer niedrigen Spannung von 12 V betrieben. Sie ist zudem sehr umweltfreundlich, da ausschliesslich destilliertes Wasser ohne Kühlmittel oder sonstige Zusätze für den Wasserkreislauf 9 verwendet wird. Die Kühlvorrichtung 1 eignet sich besonders für heisse Sommertage. An weniger warmen Tagen stösst die Luftkühlung schnell an ihre Grenzen.

Die Kühlvorrichtung 1 hat sich insbesondere bewährt in Wohnräumen, kann aber auch in Büroräumlichkeiten oder in jedem anderen abgeschlossenen Raum wie einem Zelt oder Wohnwagen eingesetzt werden.

## Patentansprüche

1. Vorrichtung (1) zur Kühlung von Raumluft in einem geschlossenen Raum mit einem in den Raum führenden Lüftungsrohr (17), **dadurch gekennzeichnet, dass** ein geschlossener Behälter (2) mit einem Wasserkreislauf (9) aus einer als Vorlauf dienenden Rohrleitung (7) und einer als Rücklauf dienenden Rohrleitung (8) vorgesehen ist, wobei der Behälter (2) ein offenes Gefäss (6) und eine am Wasserkreislauf (9) angeschlossene Wasserpumpe (10), einen Wasserkühler (11) mit Ventilator (12) und eine Zuluftöffnung (3) und eine Abluftöffnung (4) aufweist, wobei die Rohrleitungen (7, 8) in das offene Gefäss (6) münden, und ein spiralförmiges Rohr (16) im Lüftungsrohr (17) vorgesehen ist, welches am Wasserkreislauf (9) angeschlossen ist.

2. Vorrichtung (1) nach Anspruch 1, **dadurch gekennzeichnet, dass** der Wasserkühler (11) eine Vielzahl paralleler Lamellen aufweist und der Ventilator (12) auf die Lamellen ausgerichtet ist.

3. Vorrichtung (1) nach Anspruch 1 oder 2, **dadurch gekennzeichnet, dass** der Ventilator (12) ein Hochleistungsventilator mit einem Luftdurchsatz von mindestens 100 m³/h ist.

4. Vorrichtung (1) nach einem der Ansprüche 1 bis 3, **dadurch gekennzeichnet, dass** ein zusätzliches Wasserkühlelement (13) mit Ventilator (14) im Wasserkreislauf (9) vorgesehen ist.

5. Vorrichtung (1) nach Anspruch 4, **dadurch gekennzeichnet, dass** das Wasserkühlelement (13) mit Kühlrippen aus Aluminium ausgebildet ist.

6. Vorrichtung (1) nach einem der Ansprüche 1 bis 5, **dadurch gekennzeichnet, dass** der Behälter (2) an der Innenseite mit einer Wärmedämmplatte verkleidet ist.

7. Vorrichtung nach einem der Ansprüche 1 bis 6, **dadurch gekennzeichnet, dass** die Rohrleitungen (7, 8) aus Kupfer bestehen.

8. Vorrichtung nach Anspruch 7, **dadurch gekennzeichnet, dass** das spiralförmige Rohr (16) aus Kupfer besteht oder als Wellrohr aus Edelstahl ausgebildet ist.

9. Vorrichtung (1) nach einem der Ansprüche 1 bis 8, **dadurch gekennzeichnet, dass** destilliertes Wasser im Wasserkreislauf (9) vorgesehen ist.

10. Vorrichtung (1) nach einem der Ansprüche 1 bis 9, **dadurch gekennzeichnet, dass** die Wasserpumpe (10) und die Ventilatoren (12, 14) für den elektrischen Antrieb an Solarzellen angeschlossen sind.

## Claims

1. An apparatus (1) for cooling ambient air in an enclosed space, comprising a ventilation pipe (17) leading into the space, **characterized in that** a closed container (2) is provided with a water circuit (9) consisting of a pipe conduit (7) used as a feed flow pipe and a pipe conduit (8) used as a return flow pipe, wherein the container (2) comprises an open vessel (6) and a water pump (10) connected to the water circuit (9), a water cooler (11) with a ventilator (12), and a feed air opening (3) and a discharge air opening (4), wherein the pipe conduits (7, 8) open into the open vessel (6), and a helical pipe (16) is provided in the ventilation pipe (17) which is connected to the water circuit (9).

2. An apparatus (1) according to claim 1, **characterized in that** the water cooler (11) comprises a plurality of parallel fins and the ventilator (12) is aligned towards the fins.

3. An apparatus (1) according to claim 1 or 2, **characterized in that** the ventilator (12) is a high-performance ventilator with an air throughput of at least 100 m³/h.

4. An apparatus (1) according to one of the claims 1 to 3, **characterized in that** an additional water cooling element (13) with a ventilator (14) is provided in the water circuit (9).

5. An apparatus (1) according to claim 4, **characterized in that** the water cooling element (13) is provided with cooling fins made of aluminium.

6. An apparatus (1) according to one of the claims 1 to 5, **characterized in that** the container (2) is lined on the inside with a heat insulation panel.

7. An apparatus (1) according to one of the claims 1 to 6, **characterized in that** the pipe conduits (7, 8) consist of copper.

8. An apparatus (1) according to claim 7, **characterized in that** the helical pipe (16) consists of copper or is formed as a corrugated pipe made of stainless steel.

9. An apparatus (1) according to one of the claims 1 to 8, **characterized in that** distilled water is provided in the water circuit (9).

10. An apparatus (1) according to one of the claims 1 to 9, **characterized in that** the water pump (10) and the ventilators (12, 14) are connected to solar cells for the electrical drive.

## Revendications

1. Dispositif (1) pour refroidir l'air ambiant d'une pièce fermée avec un tuyau d'aération (17) menant dans la pièce, **caractérisé en ce qu'**il est prévu un réservoir (2) clos avec un circuit d'eau (9) formé d'une conduite (7) servant d'arrivée et d'une conduite (8) servant de sortie, lequel réservoir (2) comporte un récipient ouvert (6), une pompe à eau (10) raccordée au circuit d'eau (9), un refroidisseur d'eau (11) avec ventilateur (12) ainsi qu'une ouverture d'entrée d'air (3) et une ouverture de sortie d'air (4), les conduites (7, 8) débouchant dans le récipient ouvert (6) et un serpentin (16) raccordé au circuit d'eau (9) étant prévu dans le tuyau de ventilation (17).

2. Dispositif (1) selon la revendication 1, **caractérisé en ce que** le refroidisseur d'eau (11) présente plusieurs lamelles parallèles et le ventilateur (12) est dirigé vers les lamelles.

3. Dispositif (1) selon la revendication 1 ou 2, **caractérisé en ce que** le ventilateur (12) est un ventilateur à haute puissance avec un débit d'air d'au moins 100 m³/h.

4. Dispositif (1) selon l'une des revendications 1 à 3, **caractérisé en ce qu'**un élément refroidisseur d'eau supplémentaire (13) avec un ventilateur (14) est prévu dans le circuit d'eau (9).

5. Dispositif (1) selon la revendication 4, **caractérisé en ce que** l'élément refroidisseur d'eau (13) est formé d'ailettes de refroidissement en aluminium.

6. Dispositif (1) selon l'une des revendications 1 à 5, **caractérisé en ce que** le réservoir (2) est habillé sur sa face intérieure avec un panneau isolant thermique.

7. Dispositif selon l'une des revendications 1 à 6, **caractérisé en ce que** les conduites (7, 8) sont faites de cuivre.

8. Dispositif selon la revendication 7, **caractérisé en ce que** le serpentin (16) est fait de cuivre ou d'un tuyau ondulé en acier inoxydable.

9. Dispositif (1) selon l'une des revendications 1 à 8, **caractérisé en ce que** de l'eau distillée est prévue dans le circuit d'eau (9).

10. Dispositif (1) selon l'une des revendications 1 à 9, **caractérisé en ce que** la pompe à eau (10) et les ventilateurs (12, 14) sont raccordés à des cellules photovoltaïques en vue de leur actionnement électrique.
